# EUROPÄISCHE PATENTSCHRIFT

(11) **EP 2 754 911 B1**
(45) Veröffentlichungstag und Bekanntmachung des Hinweises auf die Patenterteilung: **18.03.2015**
(21) Anmeldenummer: 13006057.7
(22) Anmeldetag: 28.12.2013
(51) Int. Cl.: F16D 23/12, F16D 48/02

(54) **Hydraulische Betätigungsvorrichtung für die Betätigung wenigstens einer Reibkupplung und wenigstens eines Getriebestellglieds in einem Kraftfahrzeug**
Hydraulic actuation device for actuating at least a friction clutch and at least one gear actuator in a motor vehicle
Dispositif hydraulique d'actionnement pour la commande d'au moins un embrayage a friction et d'au moins une boite de vitesse dans un véhicule

(30) Priorität: 09.01.2013 DE 102013000157
(43) Veröffentlichungstag der Anmeldung: 16.07.2014
(73) Patentinhaber: FTE automotive GmbH, 96106 Ebern (DE)
(72) Erfinder: HEUBNER, Wilhelm, D-96274 Itzgrund (DE)
(74) Vertreter: Oppermann, Mark

(56) Entgegenhaltungen:
- EP-A1- 2 532 914
- DE-A1- 10 360 611
- DE-T2- 60 124 444

## Beschreibung

### TECHNISCHES GEBIET

Die vorliegende Erfindung bezieht sich auf eine hydraulische Betätigungsvorrichtung für die Betätigung wenigstens einer Reibkupplung und wenigstens eines Getriebestellglieds in einem Kraftfahrzeug, gemäß dem Oberbegriff des Patentanspruchs 1. Derartige Betätigungsvorrichtungen kommen in modernen Kraftfahrzeugen massenweise zum Einsatz, wenn es gilt, in automatisierten Schaltgetrieben (ASG), Doppel- oder Mehrkupplungsgetrieben (DKG) oder trennbaren Verteiler- und Differentialgetrieben Getriebestellglieder, wie Schaltgabeln und Schaltmuffen, mit oder ohne Synchronisiereinrichtung, und (Trocken- oder Nass-)Reibkupplungen möglichst flexibel und reibungsarm sowie mit geringem Bauraumbedarf zu betätigen.

### STAND DER TECHNIK

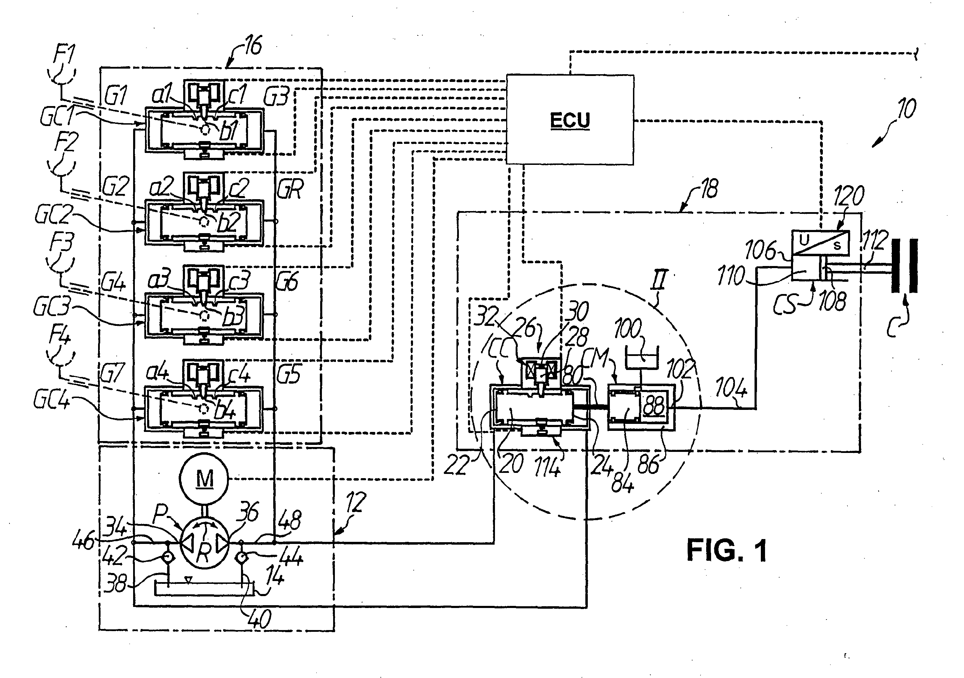

Aus der den Oberbegriff des Patentanspruchs 1 bildenden DE-A-103 60 611 (Fig. 1) ist eine hydraulische Betätigungsvorrichtung für die Betätigung einer Reibkupplung und von Stellgliedern zur Gang- bzw. Gassenwahl in einem automatisierten Kraftfahrzeug-Schaltgetriebe bekannt. Gemäß diesem Stand der Technik besitzt die Betätigungsvorrichtung eine Leistungseinheit zur Erzeugung eines hydraulischen Drucks mittels einer Pumpe, die über einen elektrischen Pumpenantrieb angetrieben werden kann, um Hydraulikfluid in einer Pumprichtung zu verschieben und dabei einen von der Pumpe über ein Rückschlagventil getrennten Druckspeicher aufzuladen. An die Leistungseinheit sind über eine Mehrzahl von elektromagnetisch betätigbaren Ventilen zum einen ein Getriebestellabschnitt mit einem Mehrstellungszylindersystem für die Stellglieder zur Gang- bzw. Gassenwahl im Schaltgetriebe und zum anderen ein Kupplungsbetätigungsabschnitt mit einer Gebereinheit und einem Kupplungsstellzylinder, dessen Kolben mit der Reibkupplung wirkverbunden ist, hydraulisch angeschlossen. Ferner ist eine Steuerelektronik vorgesehen, die mit dem Pumpenantrieb und den elektromagnetisch betätigbaren Ventilen als Steuergliedern für den Getriebestellabschnitt und den Kupplungsbetätigungsabschnitt elektrisch verbunden ist.

Zwar ist bei diesem Stand der Technik in vorteilhafter Weise nur eine Leistungseinheit vorgesehen, die sowohl den Getriebestellabschnitt als auch den Kupplungsbetätigungsabschnitt mit Hydraulikdruck versorgt. Ein Nachteil dieses Stands der Technik mit Druckspeicher in der Leistungseinheit wird jedoch darin gesehen, dass das Hydraulikfluid bei der Speicherladung auf ein Druckniveau weit oberhalb des insbesondere im Kupplungsbetätigungsabschnitt maximal benötigten Drucks gepumpt werden muss, um nach Entnahme der benötigten Menge noch den erforderlichen Arbeitsdruck bieten zu können, was energetisch ungünstig ist und den Wirkungsgrad der Vorrichtung beträchtlich mindert. Ferner erfordern die als Schieberventile ausgeführten elektromagnetisch betätigbaren Ventile - die den größten Kostenfaktor innerhalb dieser Betätigungsvorrichtung darstellen - aufgrund der engen Spalte eine hohe Ölreinheit und bedingen oftmals Filtermaßnahmen. Dennoch haben die verwendeten Schieberventile eine nicht unerhebliche Leckage, die über eine entsprechende Standzeit zu einer vollständigen Entladung des Druckspeichers führt, was eine Verzögerung der ersten Betätigung um die Ladezeit des Druckspeichers zur Folge hat. Auch beim Fahren ohne Gangwechsel, beispielsweise auf der Autobahn, ist daher ein Nachladen des Druckspeichers in regelmäßigen Zeitabständen erforderlich, was ebenfalls energetisch ungünstig ist.

### AUFGABENSTELLUNG

Der Erfindung liegt die Aufgabe zugrunde, für die Betätigung wenigstens einer Reibkupplung und wenigstens eines Getriebestellglieds in einem Kraftfahrzeug eine hydraulische Betätigungsvorrichtung bereitzustellen, welche die obigen Nachteile vermeidet und gegenüber dem geschilderten Stand der Technik vor allem einen deutlich verbesserten Gesamtwirkungsgrad bei geringeren Kosten aufweist.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 10.

Erfindungsgemäß ist bei einer hydraulischen Betätigungsvorrichtung für die Betätigung wenigstens einer Reibkupplung und wenigstens eines Getriebestellglieds in einem Kraftfahrzeug, die neben einer Leistungseinheit zur Erzeugung eines hydraulischen Drucks mittels einer Pumpe, die über einen elektrischen Pumpenantrieb antreibbar ist, um Hydraulikfluid in einer Pumprichtung zu verschieben, einen Getriebestellabschnitt mit einem hydraulisch an die Leistungseinheit angeschlossenen Getriebestellzylinder für das Getriebestellglied, einen Kupplungsbetätigungsabschnitt mit einem hydraulisch an die Leistungseinheit angeschlossenen Kupplungsstellzylinder, dessen Kolben mit der Reibkupplung wirkverbunden ist, sowie ein Steuergerät umfasst, das mit dem Pumpenantrieb und Steuergliedern für den Getriebestellabschnitt und den Kupplungsbetätigungsabschnitt elektrisch verbunden ist; dem Kolben des Kupplungsstellzylinders, der auf gegenüberliegenden Seiten hydraulisch beaufschlagbar ist, als Steuerglied eine Rastiereinrichtung mit einem Sperrelement funktional zugeordnet, das in eine eine Bewegung des Kolbens verhindernde Sperrstellung federvorgespannt ist und welches mittels eines über das Steuergerät elektrisch ansteuerbaren Aktuators von der Sperrstellung gegen die Federvorspannung in eine eine Bewegung des Kolbens zulassende Lösestellung bewegbar ist, wobei die Pumprichtung der Pumpe umkehrbar ist, um den Kolben des Kupplungsstellzylinders für eine Betätigungsbewegung je nach Pumprichtung auf seiner einen oder seiner anderen Seite hydraulisch zu beaufschlagen, und wobei das Steuergerät die elektrische Ansteuerung von Pumpenantrieb und Aktuator koordiniert, um die Reibkupplung aus- und einzurücken.

Die Koordinierung von Pumpenantrieb und Aktuator kann hierbei über das Steuergerät so erfolgen, dass zunächst der Aktuator der Rastiereinrichtung elektrisch angesteuert wird, um das Sperrelement aus seiner eine Bewegung des Kolbens des Kupplungsstellzylinders stromlos verhindernden Sperrstellung in seine Lösestellung zu bringen, so dass die durch die Rastiereinrichtung bewirkte Verrastung oder Sperrung des Kolbens aufgehoben wird. Sodann steuert das Steuergerät den Pumpenantrieb elektrisch an, um die Reversierpumpe mit der gewünschten Pumprichtung zu starten, worauf der auf die entsprechende Seite des Kolbens des Kupplungsstellzylinders einwirkende Hydraulikdruck eine Bewegung des Kolbens in vorbestimmter Richtung erzeugt, um die hiermit wirkverbundene Reibkupplung zu betätigen. Sobald nun der Kolben die gewünschte Position erreicht hat - was beispielsweise über einen Wegsensor am Kupplungsstellzylinder erfasst werden kann - werden durch das Steuergerät die Bestromung des Aktuators der Rastiereinrichtung beendet und der Pumpenantrieb ausgeschaltet. Hierauf kehrt das Sperrelement aufgrund der Federvorspannung in seine eine Bewegung des Kolbens verhindernde Sperrstellung zurück.

Als Alternative hierzu können Pumpenantrieb und Aktuator der Rastiereinrichtung mittels des Steuergeräts auch so koordiniert betrieben werden, dass zunächst der Aktuator elektrisch angesteuert wird, um die Verrastung des Kolbens des Kupplungsstellzylinders durch Zurückziehen des Sperrelements aufzuheben, sodann die Pumpe mit definierter Pumprichtung betrieben wird, um eine Bewegung des Kolbens in vorbestimmter Richtung einzuleiten, und kurz darauf der Aktuator wieder stromlos geschaltet wird, so dass das federvorgespannte Sperrelement automatisch in seine Sperrstellung gelangt / eine Verrastung erfolgt sobald dies infolge der Relativlage der beteiligten Bauteile (Sperrelement/Kolben) wieder möglich ist, worauf die Pumpe ausgeschaltet wird. Irgendeine Sensierung der Kolbenposition od.dgl. ist bei dieser Alternative nicht notwendig.

Es ist ersichtlich, dass die vorgeschlagene hydraulische Betätigungsvorrichtung bei im Verhältnis geringem vorrichtungstechnischen Aufwand, und damit schon geringen Kosten, insbesondere bei der Betätigung der Reibkupplung energetisch sehr günstig arbeitet, denn eine Bestromung der elektrischen Bauteile muss erst und nur dann erfolgen, wenn zum Aus- bzw. Einrücken der Reibkupplung eine Betätigungsbewegung des Kolbens des Kupplungsstellzylinders erforderlich ist, der ansonsten durch das Sperrelement der Rastiereinrichtung an einer Bewegung gehindert wird. Irgendwelche aufzuladenden Speicher in der Leistungseinheit oder Schieberventile - und damit eine erhöhte Ölreinheit - sind hierbei ebensowenig erforderlich wie ein "Unter-Druck-Halten" des Kupplungsstellzylinders. Weil darüber hinaus immer zwei Elemente - Pumpenantrieb und Aktuator der Rastiereinrichtung - angesteuert werden müssen, um eine Bewegung einzuleiten, ist schließlich vorteilhaft die Sicherheit gegen Fehlbetätigungen erhöht.

Grundsätzlich ist es möglich, die Rastiereinrichtung an einem Bauteil vorzusehen, das zur Herstellung der Wirkverbindung zur Reibkupplung an dem Kolben des Kupplungsstellzylinders angeschlossen ist, etwa einer Kolbenstange. Im Hinblick auf einen geringen baulichen Aufwand und eine kompakte Anordnung ist es indes bevorzugt, wenn die Rastiereinrichtung derart am Kupplungsstellzylinder angebracht ist, dass das Sperrelement mit Sperrabschnitten am Kolben des Kupplungsstellzylinders zusammenwirkt, um den Kolben in einer Ruhestellung oder einer Betätigungsstellung zu halten oder aus der jeweiligen Stellung freizugeben - mithin nicht nur eine funktionale sondern auch eine räumliche Zuordnung der Rastiereinrichtung zum Kolben des Kupplungsstellzylinders gegeben ist. Hierbei können die Sperrabschnitte am Kolben des Kupplungsstellzylinders auf einfache Weise durch axial voneinander beabstandete Aussparungen - ggf. auch in der Form von umlaufenden Radialnuten - am Kolbenumfang ausgebildet sein.

In einer bevorzugten Ausführungsform der Erfindung für den Einsatz in einem Doppel- oder Mehrkupplungsgetriebe (DKG) kann der Kolben des Kupplungsstellzylinders auf zwei gegenüberliegenden Seiten mit jeweils einer Reibkupplung wirkverbunden sein, so dass mittels nur eines Kupplungsstellzylinders wahlweise die eine Reibkupplung oder die andere Reibkupplung betätigbar ist.

Wird für besagte Koordinierung der elektrischen Ansteuerung von Pumpenantrieb und Aktuator und/oder andere Zwecke eine Weginformation benötigt, so kann der Kupplungsstellzylinder eine Sensoreinrichtung zur Erfassung der Position des Kolbens aufweisen, vorzugsweise mit einem am Zylindergehäuse angeordneten Sensor und einem am Kolben befestigten Signalelement.

Es ist weiterhin bevorzugt, wenn es sich bei dem elektrisch ansteuerbaren Aktuator um einen elektromagnetischen Aktuator handelt, wie sie kostengünstig und problemlos kommerziell verfügbar sind. Da die elektrische Ansteuerung des Aktuators immer nur kurzzeitig erfolgt, nämlich dann, wenn eine Betätigungsbewegung des Kolbens des Kupplungsstellzylinders erwünscht ist, ist die Energiebilanz günstig.

Grundsätzlich ist es möglich, die Wirkverbindung des Kolbens des Kupplungsstellzylinders mit der Reibkupplung so auszugestalten, dass eine direkte, mechanische Kopplung mittels etwa einer Kolbenstange gegeben ist. Insbesondere im Hinblick auf eine hohe Flexibilität, was die räumliche Anordnung der beteiligten Komponenten angeht, bevorzugt ist es jedoch, wenn der Kolben des Kupplungsstellzylinders auf wenigstens einer Seite mechanisch mit einem Geberkolben eines Kupplungsgeberzylinders gekoppelt ist, welcher über eine Druckleitung hydraulisch an einen Kupplungsnehmerzylinder mit einem Nehmerkolben angeschlossen ist, der seinerseits mechanisch mit der Reibkupplung verbunden ist - also eine (auch) hydraulische Wirkverbindung vorhanden ist.

Kann hierbei die hydraulische Wirkverbindung beeinflusst bzw. gesteuert werden, so ist dies von Vorteil für die Feinfühligkeit des Aus- und insbesondere Einrückens der Reibkupplung - namentlich dann, wenn es sich bei Letzterer um eine Nassreibkupplung handelt, die in der Regel einen nur sehr kleinen Betätigungsweg besitzt. So kann die Betätigungsvorrichtung derart ausgebildet sein, dass dem Kupplungsgeberzylinder in an sich bekannter Weise ein Ausgleichsbehälter für Hydraulikfluid zugeordnet ist, wobei ausgehend vom Kupplungsgeberzylinder in die Druckleitung zwischen dem Kupplungsgeberzylinder und dem Kupplungsnehmerzylinder ein in Richtung des Kupplungsgeberzylinders sperrendes Rückschlagventil und ein elektromagnetisch betätigbares, über eine Ablaufleitung mit dem Ausgleichsbehälter verbundenes Proportional-Drosselventil (das grundsätzlich in Durchgangs-Null-Stellung oder Sperr-Null-Stellung vorgespannt sein kann) geschaltet sind, mittels dessen der hydraulische Druck im Kupplungsnehmerzylinder definiert einstellbar ist.

In einer Variante dieser Ausgestaltung mit kontrollierbarer hydraulischer Wirkverbindung zwischen Kupplungsstellzylinder und Reibkupplung kann das Proportional-Drosselventil derart ausgebildet sein, dass es sich im nicht angesteuerten Zustand in Durchgangs-Null-Stellung befindet, so dass ohne Bestromung des Proportional-Drosselventils im Kupplungsnehmerzylinder kein Druck aufgebaut werden kann. Da somit jeweils zwei Elemente (Pumpenantrieb und Proportional-Drosselventils) angesteuert werden müssen, um eine Betätigungsbewegung am Kupplungsnehmerzylinder einzuleiten, ist die Sicherheit gegen Fehlbetätigungen deutlich erhöht.

In einer anderen Variante der Ausgestaltung mit beeinflussbarer hydraulischer Wirkverbindung zwischen Kupplungsstellzylinder und Reibkupplung kann schließlich zwischen das Rückschlagventil und das Proportional-Drosselventil, welches sich im nicht angesteuerten Zustand in Sperr-Null-Stellung befindet, ein Druckspeicher in die Druckleitung geschaltet sein, die zwischen dem Rückschlagventil und dem Proportional-Drosselventil über ein im nicht angesteuerten Zustand sperrendes Schaltventil mit der Ablaufleitung hydraulisch verbunden ist. Bei geladenem Druckspeicher ermöglicht dies eine besonders schnelle Betätigung der Reibkupplung, wie es für bestimmte Anwendungen so erwünscht sein kann, dass der insgesamt höhere vorrichtungstechnische Aufwand dieser Variante in Kauf genommen wird.

### KURZE BESCHREIBUNG DER ZEICHNUNGEN

Im Folgenden wird die Erfindung anhand bevorzugter Ausführungsbeispiele unter Bezugnahme auf die beigefügten, lediglich schematischen Zeichnungen näher erläutert, in denen gleiche Bezugszeichen gleiche bzw. entsprechende Teile kennzeichnen und alle Komponenten in ihrer Ruhestellung, d.h. in einem nicht betätigten Zustand dargestellt sind. In den Zeichnungen zeigen:
- Fig. 1: ein Schaltbild einer hydraulischen Betätigungsvorrichtung für die Betätigung einer Reibkupplung mittels eines Kupplungsstellzylinders und von vier Getriebestellgliedern mittels einer entsprechenden Anzahl von Getriebestellzylindern, bei der der Kupplungsstellzylinder mit der Reibkupplung über eine Reihenschaltung eines Kupplungsgeberzylinders und eines Kupplungsnehmerzylinders wirkverbunden ist, als ein erstes erfindungsgemäßes Ausführungsbeispiel;

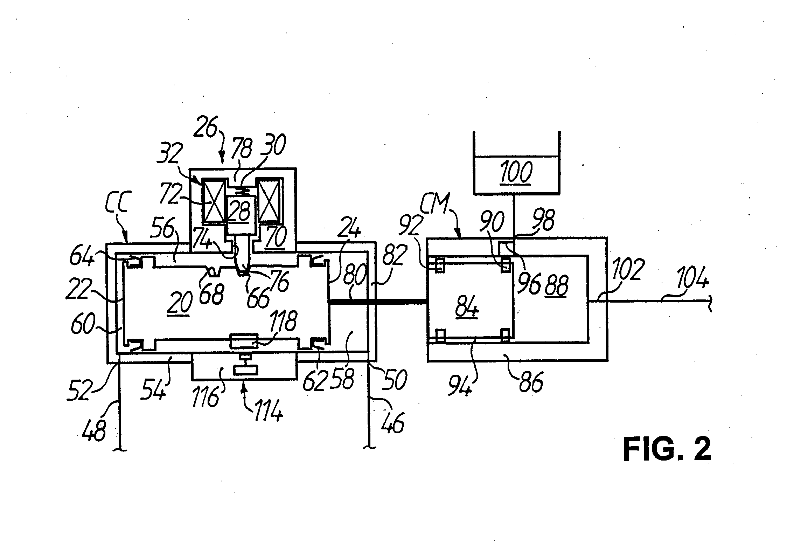

- Fig. 2: eine vergrößerte Darstellung des Details II in Fig. 1, der insbesondere weitere Einzelheiten zum Kupplungsstellzylinder zu entnehmen sind;

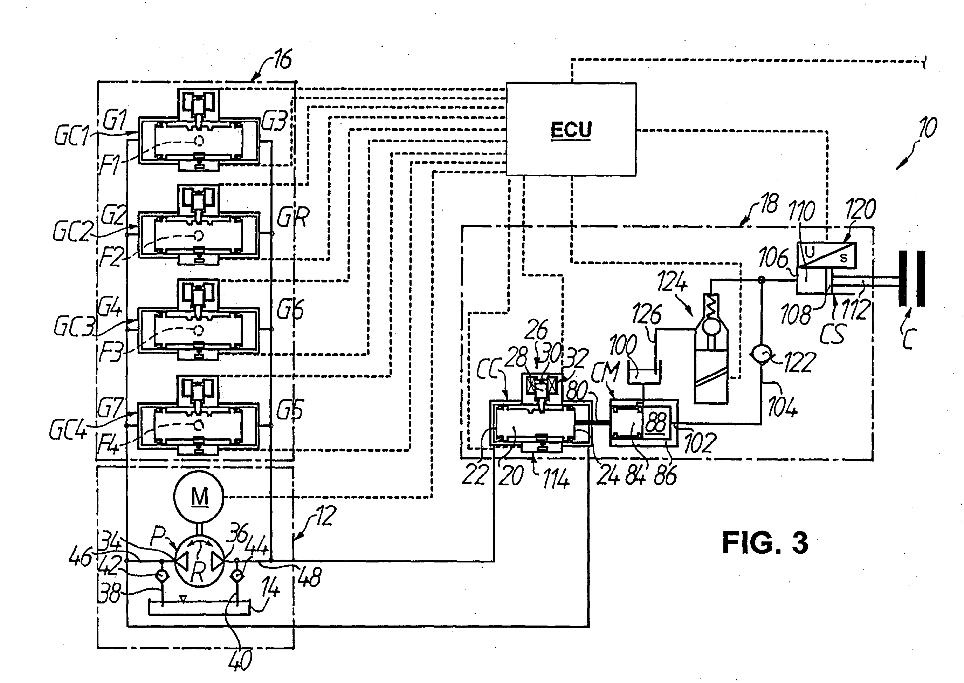

- Fig. 3: ein Schaltbild einer hydraulischen Betätigungsvorrichtung für die Betätigung einer Reibkupplung und von vier Getriebestellgliedern nach einem zweiten erfindungsgemäßen Ausführungsbeispiel, bei dem im Vergleich zum ersten Ausführungsbeispiel die hydraulische Verbindung zwischen Kupplungsgeberzylinder und Kupplungsnehmerzylinder mit einer Ventilanordnung zur Druckeinstellung versehen ist;

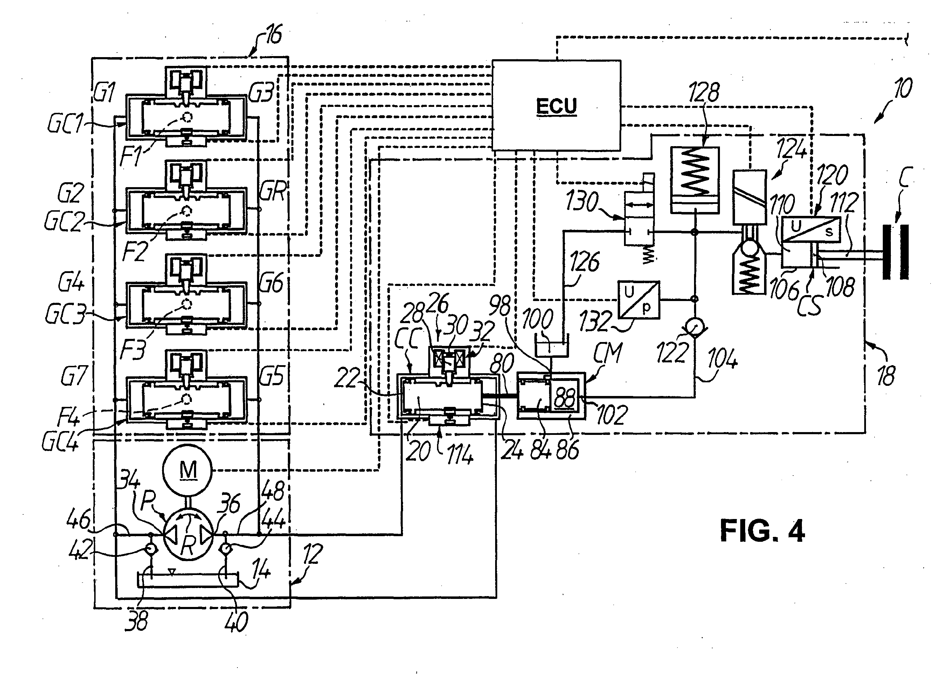

- Fig. 4: ein Schaltbild einer hydraulischen Betätigungsvorrichtung für die Betätigung einer Reibkupplung und von vier Getriebestellgliedern nach einem dritten erfindungsgemäßen Ausführungsbeispiel, bei dem im Vergleich zum zweiten Ausführungsbeispiel die hydraulische Verbindung zwischen Kupplungsgeberzylinder und Kupplungsnehmerzylinder mit einer anderen Ventilanordnung zur Druckeinstellung und einem Druckspeicher versehen ist; und

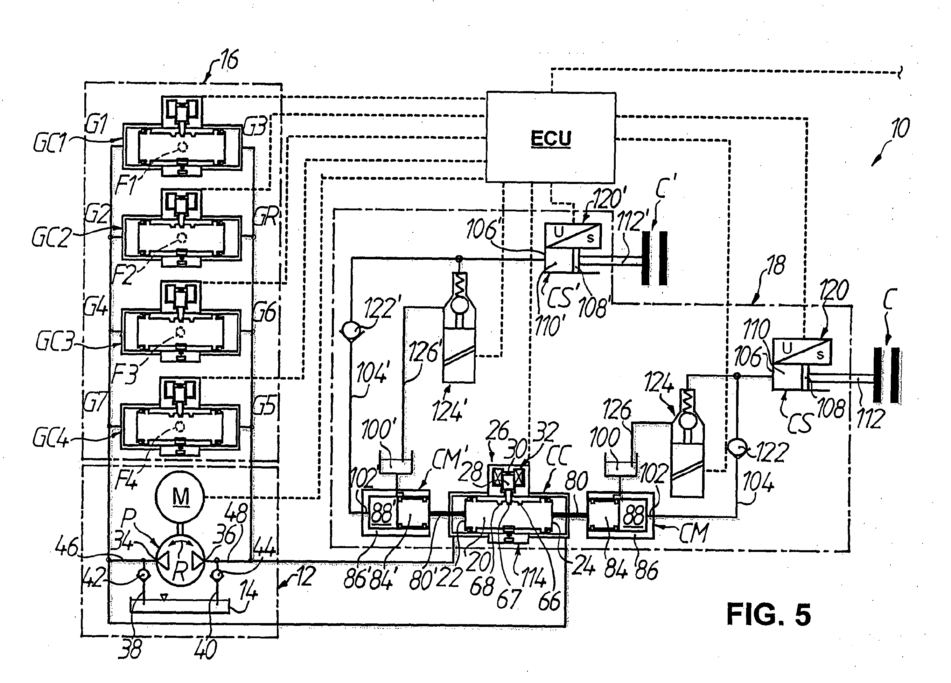

- Fig. 5: ein Schaltbild einer hydraulischen Betätigungsvorrichtung für die Betätigung von zwei Reibkupplungen und vier Getriebestellgliedern in einem Doppelkupplungsgetriebe, als ein viertes erfindungsgemäßes Ausführungsbeispiel, bei dem jeder Reibkupplung eine Reihenschaltung eines Kupplungsgeberzylinders und eines Kupplungsnehmerzylinders mit Ventilanordnung zur Druckeinstellung analog Fig. 3 zugeordnet ist, wobei der Kupplungsstellzylinder beide Kupplungsgeberzylinder betätigt.

In den Zeichnungen - und in der folgenden Beschreibung - wurde auf eine nähere Darstellung bzw. Erläuterung der zu betätigenden Getriebestellglieder (z.B. Schaltmuffen oder Schaltstangen mit Schaltgabeln) und (Trocken- oder Nass-)Reibkupplungen verzichtet, weil diese Elemente und deren Funktion dem Fachmann hinreichend bekannt sind und diesbezügliche Ausführungen für das Verständnis der vorliegenden Erfindung nicht erforderlich erscheinen.

### DETAILLIERTE BESCHREIBUNG DER AUSFÜHRUNGSBEISPIELE

In Fig. 1 beziffert das Bezugszeichen 10 allgemein eine hydraulische Betätigungsvorrichtung für die Betätigung einer (oder mehrerer) Reibkupplung(en) C und wenigstens eines Getriebestellglieds - im dargestellten Ausführungsbeispiel sind für ein automatisiertes Schaltgetriebe (ASG) mit sieben Vorwärtsgängen G1 bis G7 und einem Rückwärtsgang GR vier Getriebestellglieder F1 bis F4 mit gestrichelten Linien schematisch als Schaltstangen mit Schaltgabeln gezeigt - in einem Kraftfahrzeug. Die Betätigungsvorrichtung 10 kann grob in drei Hydraulikabschnitte unterteilt werden (jeweils mit strichpunktierten Linien eingerahmt). Im Einzelnen handelt es sich hierbei um: (erstens) eine Leistungseinheit 12 zur Erzeugung eines hydraulischen Drucks mittels einer an einem Vorratsbehälter 14 angeschlossenen Pumpe P, die über einen elektrischen Pumpenantrieb M angetrieben werden kann, um Hydraulikfluid (z.B. Öl oder Bremsflüssigkeit) in einer Pumprichtung R zu verschieben, (zweitens) einen Getriebestellabschnitt 16 mit den Getriebestellgliedern F1 bis F4 zugeordneten Getriebestellzylindern GC1 bis GC4, die hydraulisch an die Leistungseinheit 12 angeschlossen sind, und (drittens) einen Kupplungsbetätigungsabschnitt 18 mit einem hydraulisch an die Leistungseinheit 12 angeschlossenen Kupplungsstellzylinder CC, dessen Kolben 20 auf noch zu beschreibende Weise mit der Reibkupplung C wirkverbunden ist. Darüber hinaus ist ein Steuergerät ECU vorgesehen, das mit dem Pumpenantrieb M und noch näher zu erläuternden Steuergliedern für den Getriebestellabschnitt 16 und den Kupplungsbetätigungsabschnitt 18 elektrisch verbunden ist (ausgehend vom Steuergerät ECU mit gestrichelten Linien zu den Seiten und nach unten eingezeichnet) und seinerseits von einem übergeordneten Getriebesteuergerät (nicht dargestellt) angesteuert wird (gestrichelte Linie oberhalb des Steuergeräts ECU).

Wesentlich ist, dass - wie nachfolgend anhand der Fig. 1 und 2 ebenfalls noch detailliert beschrieben werden wird - dem Kolben 20 des Kupplungsstellzylinders CC, der auf gegenüberliegenden Seiten 22, 24 hydraulisch beaufschlagbar ist (doppeltwirkende Kolben-Zylinder-Anordnung), als Steuerglied eine Rastiereinrichtung 26 mit einem Sperrelement 28 funktional - und im dargestellten Ausführungsbeispiel auch räumlich - zugeordnet ist, das mittels einer Feder 30, z.B. einer Schraubendruckfeder in eine eine Bewegung des Kolbens 20 verhindernde Sperrstellung federvorgespannt ist und welches mittels eines über das Steuergerät ECU elektrisch ansteuerbaren, vorzugsweise elektromagnetischen Aktuators 32 von der Sperrstellung gegen die Federvorspannung in eine eine Bewegung des Kolbens 20 zulassende bzw. ermöglichende Lösestellung bewegt werden kann. Zudem ist die Pumprichtung R der Pumpe P umkehrbar (in Fig. 1 durch einen Doppelpfeil angedeutet; sog. Reversierpumpe), um den Kolben 20 des Kupplungsstellzylinders CC für eine Betätigungsbewegung je nach Pumprichtung R auf seiner einen (linke Wirkfläche) oder seiner anderen (rechte Wirkfläche) Seite 22, 24 hydraulisch zu beaufschlagen, wobei das Steuergerät ECU die elektrische Ansteuerung von Pumpenantrieb M und Aktuator 32 geeignet koordiniert, um die Reibkupplung C wie benötigt aus- bzw. einzurücken (nachfolgend noch näher erläutert).

Die Pumpe P der Leistungseinheit 12 weist zwei Hydraulikanschlüsse 34, 36 auf, von denen je nach der gewählten bzw. von dem Steuergerät ECU vorgegebenen Pumprichtung R der eine Anschluss den Pumpeneingang (Sauganschluss), über den das Hydraulikfluid an- bzw. nachgesaugt wird, und der andere Anschluss den Pumpenausgang (Druckanschluss) bildet, über den das Hydraulikfluid mit Druck abgegeben wird. Als Pumpentypen in Frage kommen z.B. Zahnradpumpen, Rollenzellenpumpen, Flügelzellenpumpen und Radial- oder Axial-Kolbenpumpen. Für die vorliegende Anwendung ist es grundsätzlich ausreichend, wenn die Pumpe P als Konstantpumpe ausgeführt ist, die für eine vorbestimmte Drehzahl des Pumpenantriebs M einen konstanten Volumenstrom liefert. Ggf. kann der Pumpenantrieb M in der Drehzahl steuerbar sein, um beispielsweise auf die Stellgeschwindigkeit des Kupplungsstellzylinders CC Einfluss nehmen zu können. Die Bestromung bzw. Ansteuerung des Pumpenantriebs M erfolgt über das in Fig. 1 gestrichelt eingezeichnete Versorgungskabel, welches an das Steuergerät ECU elektrisch angeschlossen ist.

Jeder Hydraulikanschluss 34, 36 der Pumpe P ist mit dem Vorratsbehälter 14 über eine Ansaugleitung 38, 40 verbunden, in die ein in Richtung des Vorratsbehälters 14 sperrendes Rückschlagventil 42, 44 geschaltet ist. Die Rückschlagventile 42, 44 können in ihre in Richtung des Vorratsbehälters 14 sperrende Stellung vorgespannt sein; dies ist in den Figuren jedoch nicht gezeigt. Darüber hinaus ist an jeden Hydraulikanschluss 34, 36 eine sich verzweigende Druckleitung 46, 48 angeschlossen, die für eine hydraulische Verbindung der Leistungseinheit 12 zum Kupplungsstellzylinder CC und zu den Getriebestellzylindern GC1 bis GC4 sorgt, welche sämtlich bezüglich der Pumpe P parallel geschaltet sind. Insoweit ist für den Fachmann ersichtlich, dass, wenn die Pumpe P z.B. mit einer Pumprichtung R im Uhrzeigersinn in Fig. 1 betrieben wird, die Pumpe P über den Hydraulikanschluss 34 Hydraulikfluid aus der Druckleitung 46 und ggf. über das Rückschlagventil 42 und die Ansaugleitung 38 aus dem Vorratsbehälter 14 ansaugt. Über ihren anderen Hydraulikanschluss 36 fördert die Pumpe P indes das Hydraulikfluid mit Druck in die Druckleitung 48. Hierbei verhindert das Rückschlagventil 44 einen Druckabbau bzw. einen Rückfluss des Hydraulikfluids zum Vorratsbehälter 14. In analoger Weise wird die Druckleitung 48 druckentlastet, während die Druckleitung 46 druckbeaufschlagt wird, wenn die Pumpe P mit einer Pumprichtung R entgegen dem Uhrzeigersinn in Fig. 1 arbeitet, wobei Hydraulikfluid in Fig. 1 von rechts der Pumpe P nach links der Pumpe P gefördert bzw. verschoben wird.

Im Kupplungsbetätigungsabschnitt 18 führen die Druckleitungen 46, 48 gemäß Fig. 2 jeweils zu einem Steuer- oder Druckanschluss 50, 52 des Kupplungsstellzylinders CC. Die Druckanschlüsse 50, 52 sind in Fig. 2 schematisch als Kanäle in einem Zylindergehäuse 54 des Kupplungsstellzylinders CC dargestellt, welches einen Zylinderraum 56 des Kupplungsstellzylinders CC bildet, in dem der Kolben 20 zwei Druckräume 58, 60 voneinander trennt. Dabei ist der Kolben 20 an seinen beiden Enden außenumfangsseitig mit jeweils einem Dichtelement 62, 64 - z.B. einem an sich bekannten Nutring - versehen, das mit der Innenumfangsfläche des Zylindergehäuses 54 zusammenwirkt, um den jeweiligen Druckraum 58 bzw. 60 dynamisch abzudichten.

In einem drucklosen Bereich des Zylinderraums 56 in axialer Richtung gesehen zwischen den Dichtelementen 62, 64 sind am Kolben 20 mehrere, hier zwei Sperrabschnitte ausgebildet, mit denen das Sperrelement 28 der im dargestellten Ausführungsbeispiel am Kupplungsstellzylinder CC, genauer dessen Zylindergehäuse 54 angebrachten Rastiereinrichtung 26 zusammenwirkt, um den Kolben 20 in einer Ruhestellung (wie gezeigt) oder einer Betätigungsstellung zu halten oder aus der jeweiligen Stellung freizugeben, wie nachfolgend noch näher beschrieben werden wird. Bei den kolbenseitigen Sperrabschnitten handelt es sich im dargestellten Ausführungsbeispiel um axial voneinander beabstandete Aussparungen 66, 68, die am Umfang des Kolbens 20 ausgebildet sind.

Die Rastiereinrichtung 26 weist ein Gehäuse 70 auf, welches im dargestellten Ausführungsbeispiel auf geeignete Weise am Außenumfang des Zylindergehäuses 54 des Kupplungsstellzylinders CC befestigt ist. In dem Gehäuse 70 ist eine Magnetspule 72 des Aktuators 32 aufgenommen, die das hier als Anker eines Magnetantriebs fungierende, ferromagnetische Sperrelement 28 zumindest teilweise konzentrisch umgibt. Das in der Magnetspule 72 kolbenartig verschiebbare Sperrelement 28 durchgreift eine Öffnung 74 im Gehäuse 70, so dass ein am in Fig. 2 unteren Ende des Sperrelements 28 vorgesehener, sich zu seinem freien Ende im Querschnitt geringfügig verjüngender Rastiervorsprung 76 mit der Aussparung 66 oder 68 im Kolben 20 in Eingriff gelangen kann. An seinem anderen, in Fig. 1 oberen Ende ist das Sperrelement 28 über die Feder 30 gegenüber einem Bodenbereich 78 des Gehäuses 70 elastisch abgestützt. Die Bestromung der Magnetspule 72 erfolgt schließlich über das in Fig. 1 gestrichelt eingezeichnete Versorgungskabel, das elektrisch an das Steuergerät ECU angeschlossen ist.

Insoweit ist ersichtlich, dass die Feder 30 bestrebt ist, das Sperrelement 28 aus dem Gehäuse 70 der Rastiereinrichtung 26 herauszudrücken, so dass im unbestromten Zustand der Magnetspule 72 der Rastiervorsprung 76 aufgrund der Kraft der Feder 30 mit einer der Aussparungen 66, 68 am Kolben 20 in Eingriff gehalten wird. Durch den somit bewirkten Formschluss wird der Kolben 20 selbst bei Druckbeaufschlagung einer der Druckräume 58, 60 daran gehindert, sich im Kupplungsstellzylinder CC zu verschieben. Wird die Magnetspule 72 hingegen bestromt, so zieht die resultierende Magnetkraft das Sperrelement 28 entgegen der Kraft der Feder 30 in das Gehäuse 70 in einer Richtung zurück, die im Wesentlichen senkrecht zur Verschieberichtung des Kolbens 20 verläuft, wobei der Rastiervorsprung 76 von der jeweiligen Aussparung 66 bzw. 68 freikommt. Der Kolben 20 kann nun durch Druckbeaufschlagung des entsprechenden Druckraums 58 oder 60 in Fig. 2 nach links bzw. rechts verschoben werden.

Die jeweilige Stellung der Rastiereinrichtung 26 (offen bzw. rastiert), d.h. des Sperrelements 28 bezüglich des Gehäuses 70 der Rastiereinrichtung 26 kann vermittels des Steuergeräts ECU indirekt über die Induktivität des Aktuators 32 ermittelt werden, die sich bei einer Bewegung des Sperrelements 28 relativ zum Gehäuse 70 nach Maßgabe des aktuellen Luftspalts, also des lichten Abstands zwischen dem Sperrelement 28 und dem Bodenbereich 78 des Gehäuses 70 im Bereich der Feder 30 ändert.

Auf der in Fig. 2 rechten Seite des Kolbens 20 ist an diesem eine Kolbenstange 80 befestigt, die sich in geeignet abgedichteter Weise (nicht näher gezeigt) durch eine Wandung 82 des Zylindergehäuses 54 des Kupplungsstellzylinders CC hindurch erstreckt und mit einem benachbart angeordneten Kupplungsgeberzylinder CM betätigungswirksam verbunden ist, genauer mit dessen Geberkolben 84 mechanisch gekoppelt ist.

Der in an sich bekannter Weise ausgebildete Kupplungsgeberzylinder CM besitzt ein Zylindergehäuse 86, in dem der Geberkolben 84 längsverschieblich aufgenommen ist und einen Druckraum 88 begrenzt. Der Geberkolben 84 ist am Außenumfang mit einem Primärdichtelement 90 und einem Sekundärdichtelement 92 versehen, die gegenüber einer Innenumfangsfläche des Zylindergehäuses 86 dynamisch abdichten und zwischen sich einen Nachlaufbereich 94 begrenzen. In der in Fig. 2 dargestellten Ruhestellung des Geberkolbens 84 ist der Druckraum 88 mit dem Nachlaufbereich 94 über eine Nachlaufverbindung 96 drucklos verbunden, die über einen Nachlaufanschluss 98 mit einem Ausgleichsbehälter 100 in Fluidverbindung steht. Bei einer Verschiebung des Geberkolbens 84 nach rechts in Fig. 2 überfährt das Primärdichtelement 90 die Nachlaufverbindung 96, so dass der Druckraum 88 und der Nachlaufbereich 94 hydraulisch voneinander getrennt werden und sich im Druckraum 88 ein hydraulischer Druck aufbaut. Über einen Druckanschluss 102 des Kupplungsgeberzylinders CM kann nun Hydraulikfluid aus dem Druckraum 88 in eine an den Druckanschluss 102 angeschlossene Druckleitung 104 verschoben werden.

Wie ferner der Fig. 1 zu entnehmen ist ist der Kupplungsgeberzylinder CM über die Druckleitung 104 hydraulisch an einen Kupplungsnehmerzylinder CS angeschlossen, bei dem es sich um einen klassischen Nehmerzylinder oder einen sog. Zentralausrücker (Ringkolben-Ringzylinder-Anordnung mit zentralem Wellendurchgang) handeln kann. Der Kupplungsnehmerzylinder CS besitzt in an sich bekannter Weise einen in einem Zylindergehäuse 106 längsverschieblich aufgenommenen, gegenüber einer Innenumfangsfläche des Zylindergehäuses 106 geeignet dynamisch abgedichteten Nehmerkolben 108, der auf einer Seite einen über die Druckleitung 104 hydraulisch beaufschlagbaren Druckraum 110 begrenzt und auf seiner anderen Seite bei 112 mechanisch mit der Reibkupplung C verbunden ist.

Es ist ersichtlich, dass bei einer Betätigung des Kupplungsgeberzylinders CM Hydraulikfluid durch den Geberkolben 84 aus dem Druckraum 88 hinaus geschoben und aufgrund der hydraulischen Verbindung über die Druckleitung 104 in entsprechendem Maße in den Druckraum 110 des Kupplungsnehmerzylinders CS hineingeschoben wird, wo es im Ergebnis zu einer Verschiebung des Nehmerkolbens 108 und damit über die mechanische Verbindung 112 zu einer Ausrückbewegung an der Reibkupplung C kommt. Zurückkommend auf Fig. 2 ist des Weiteren festzuhalten, dass im dargestellten Ausführungsbeispiel zwei Aussparungen 66, 68 am Kolben 20 des Kupplungsstellzylinders CC vorgesehen sind, deren axiale Lage auf dem Kolben 20 und Abstand zueinander bestimmte Stellungen des mit dem Kolben 20 wirkverbundenen Geberkolbens 84 definieren. Befindet sich der Rastiervorsprung 76 wie in den Fig. 1 und 2 gezeigt mit der rechten Aussparung 66 am Kolben 20 in Eingriff, so definiert dies - über die durch die Kolbenstange 80 bewirkte Kopplung - die Ruhestellung des Geberkolbens 84 und damit auch des Nehmerkolbens 108; die Reibkupplung C befindet sich folglich in ihrem unbetätigten, hier eingerückten Zustand. Ist der Rastiervorsprung 76 hingegen mit der linken Aussparung 68 am Kolben 20 verrastet, so definiert dies eine Betätigungsstellung des Geberkolbens 84 und somit - über die Flüssigkeitssäule in der Druckleitung 104 - auch des Nehmerkolbens 108; die Reibkupplung C befindet sich demgemäß in ihrem betätigten, hier ausgerückten Zustand.

Wie in der Fig. 2 weiterhin zu erkennen ist ist der Kupplungsstellzylinder CC im dargestellten Ausführungsbeispiel mit einer Sensoreinrichtung 114 zur Erfassung der Position des Kolbens 20 ausgerüstet, die einen am Zylindergehäuse 54 angeordneten Sensor 116 (z.B. einen Hall-Sensor) und ein am Kolben 20 befestigtes Signalelement 118 (z.B. ein Permanentmagnet) aufweist. Die Sensoreinrichtung 114 ist ebenfalls elektrisch an das Steuergerät ECU angeschlossen (in Fig. 1 mit gestrichelter Linie angedeutet), das die Stellungssignale verarbeitet, etwa um den jeweiligen Betätigungszustand des Kupplungsstellzylinders CC zu bestimmen und/oder die Rastiereinrichtung 26 in Anhängigkeit von der Position des Kolbens 20 anzusteuern. Auch der Kupplungsnehmerzylinder CS kann mit einer an das Steuergerät ECU elektrisch angeschlossenen Sensorik 120 für den Hub des Nehmerkolbens 108 versehen sein, wie in Fig. 1 gezeigt.

Was schließlich den Getriebestellabschnitt 16 mit seinen vier doppeltwirkenden Getriebestellzylindern GC1 bis GC4 angeht, die in bezüglich der Pumpe P hydraulischer Parallelschaltung an die Druckleitungen 46, 48 angeschlossen sind, soll hier festgehalten werden, dass die einzelnen Getriebestellzylinder GC1 bis GC4 - wie die schematische Darstellung in Fig. 1 schon vermuten lässt - dem Kupplungsstellzylinder CC sehr ähnlich ausgebildet sind. Auch hierbei handelt es sich um sensierte Stellzylinder, deren Kolben mittels einer jeweils zugeordneten, federvorgespannten und über das Steuergerät ECU elektromagnetisch entriegelbaren Verrastung wahlweise festlegbar oder freigebbar sind, um je nach hydraulischer Beaufschlagung der Kolben in Fig. 1 nach rechts oder links verschoben zu werden. Allerdings sind die Kolben der Getriebestellzylinder GC1 bis GC4 im dargestellten Ausführungsbeispiel - anders als der Kupplungsstellzylinder CC gemäß Fig. 1 - jeweils mit drei Sperraussparungen a1, b1, c1, a2, b2, c2, a3, b3, c3 bzw. a4, b4, c4 versehen. Während die Sperraussparungen b1 bis b4 jeweils eine Ruhe- oder Neutralstellung des jeweiligen Kolbens und des damit wirkverbundenen Getriebestellglieds F1 bis F4 definieren, sorgen die übrigen Sperraussparungen a1 bis a4 und c1 bis c4 jeweils für eine bestimmte Schaltstellung. Dabei steht eine Verrastung bei a1 für einen eingelegten Vorwärtsgang G3, bei a2 für einen eingelegten Rückwärtsgang GR, bei a3 für einen eingelegten Vorwärtsgang G6, bei a4 für einen eingelegten Vorwärtsgang G5, bei c1 für einen eingelegten Vorwärtsgang G1, bei c2 für einen eingelegten Vorwärtsgang G2, bei c3 für einen eingelegten Vorwärtsgang G4 und schließlich bei c4 für einen eingelegten Vorwärtsgang G7. Weitere, insbesondere konstruktive Details solcher Getriebestellzylinder sind der älteren deutschen Patentanmeldung Nr. 10 2011 107 263.6 (DE-A-10 2011 107 263) derselben Anmelderin zu entnehmen, auf die hiermit diesbezüglich ausdrücklich Bezug genommen wird.

Mit der vorbeschriebenen hydraulischen Betätigungsvorrichtung 10 ist z.B. folgender Betrieb möglich, wobei das Steuergerät ECU den elektrischen Pumpenantrieb M und die elektromagnetischen Aktuatoren 32 der Rastiereinrichtungen 26 an den Stellzylindern CC, GC1 bis GC4 - ggf. unter Berücksichtigung sensierter Kolbenpositionen - geeignet ansteuert und koordiniert.

Soll der Kolben 20 des Kupplungsstellzylinders CC für eine Betätigungsbewegung am Kupplungsgeberzylinder CM aus einer vorbestimmten Stellung, die bei diesem Ausführungsbeispiel durch die Sensoreinrichtung 114 bekannt ist, beispielsweise der Ruhestellung gemäß den Fig. 1 und 2 verlagert werden, so wird über das Steuergerät ECU zunächst der Aktuator 32 der Rastiereinrichtung 26 bestromt. Infolgedessen wird das Sperrelement 28 entgegen der Kraft der Feder 30 magnetisch zurückgezogen, wobei der Rastiervorsprung 76 von der jeweiligen, hier der rechten Aussparung 66 am Kolben 20 freikommt, so dass die Rastierung gelöst ist. Nun wird über das Steuergerät ECU der Pumpenantrieb M derart bestromt, dass die Pumpe P mit derjenigen Pumprichtung R anläuft, die für die gewünschte Stellbewegungsrichtung benötigt wird, z.B. mit einer Pumprichtung R von links der Pumpe P nach rechts der Pumpe P in Fig. 1 (Pumpe dreht im Uhrzeigersinn). Folglich kommt es zu einer hydraulischen Beaufschlagung des Druckraums 60 im Kupplungsstellzylinder CC und damit einer Verschiebung des Kolbens 20 nach rechts in Fig. 1. Nach kurzem Verfahrweg des Kolbens 20 kann die Bestromung des Aktuators 32 abgestellt werden, so dass die Feder 30 das Sperrelement 28 in Fig. 1 nach unten zu verschieben versucht. Dies gelingt sobald der Kolben 20 bezüglich des Sperrelements 28 eine Position erreicht hat, bei der der Rastiervörsprung 76 in die Aussparung 68 hineingleiten kann. Nun wird der Pumpenantrieb M ausgeschaltet, so dass das System wieder gänzlich stromlos ist. Auf diese Art und Weise kann der Kolben 20 von einer Rastierstellung zu einer anderen Rastierstellung verfahren werden.

Es ist ersichtlich, dass im Gesamtsystem eine Betätigungsbewegung an der Reibkupplung C erzeugt bzw. ein bestimmtes der Getriebestellglieder F1 bis F4 verfahren werden kann, indem das Steuergerät ECU durch Bestromung der Rastiereinrichtung 26 an dem der Reibkupplung C bzw. dem jeweiligen Getriebestellglied F1 bis F4 zugeordneten Stellzylinder CC bzw. GC1 bis GC4 die Kolbenrastierung aufhebt und die Pumpe P nach Maßgabe der gewünschten Stellrichtung mit bestimmter Pumprichtung R anschaltet, während die Kolben der weiteren Stellzylinder über die diesen funktional zugeordneten Rastiereinrichtungen stromlos gehalten werden. Mit dieser Schaltung ist es grundsätzlich auch möglich, mehrere Stellbewegungen in derselben Stellrichtung zugleich auszuführen, indem die entsprechenden Rastiereinrichtungen und der Pumpenantrieb M zur selben Zeit bestromt werden, worauf sich die druckbeaufschlagten freigegebenen Kolben in derselben Stellrichtung bewegen.

Kupplungs- und Schaltvorgänge können demgemäß stichwortartig beschrieben wie folgt ausgeführt werden:
A. Anfahren: Das Steuergerät ECU erhält von der übergeordneten Getriebesteuerung das Signal zum Anfahren sowie Informationen über die geforderte Dynamik. Alle elektrischen Bauteile außer den Wegsensoren sind stromlos, wenn nicht anders angegeben; anfangs sind alle Stellzylinder CC, GC1 bis GC4 in Ruhestellung rastiert (Eingriff in Aussparungen 66 bzw. b1 bis b4).
A.1 Zum Öffnen der Reibkupplung C wird die Rastiereinrichtung 26 am Kupplungsstellzylinder CC bestromt, die Pumpe P wird rechtsdrehend eingeschaltet, worauf der Kolben 20 im Kupplungsstellzylinder CC nach rechts verfährt und den Kupplungsgeberzylinder CM betätigt. Die Position des Kolbens 20 wird hierbei über die integrierte Sensoreinrichtung 114 erfasst. Somit wird der Kupplungsnehmerzylinder CS hydraulisch angesteuert und öffnet die Reibkupplung C. In Endstellung des Kolbens 20 wird die Rastiereinrichtung 26 entstromt und hält damit den Kolben 20 in Position (Rastiervorsprung 76 steht mit Aussparung 68 in Eingriff); die Pumpe P wird abgeschaltet.
A.2 Zum Einlegen des geforderten Gangs - sofern der 1. Vorwärtsgang G1 oder der Rückwärtsgang GR nicht bereits eingelegt ist - wird wie folgt vorgegangen. Ist der 1. Vorwärtsgang G1 einzulegen, wird die Rastiereinrichtung am Getriebestellzylinder GC1 bestromt; die Pumpe P wird wiederum rechtsdrehend eingeschaltet. Demgemäß verfährt der Kolben im Getriebestellzylinder GC1 nach links, so dass über das Getriebestellglied F1 der 1. Vorwärtsgang G1 eingelegt wird. Der Kolben des Getriebestellzylinders GC1 wird sodann in dieser Position durch Entstromen der zugeordneten Rastiereinrichtung festgehalten (Eingriff in Aussparung c1).
A.3 Für den eigentlichen Anfahrvorgang wird die Pumpe P zunächst rechtsdrehend betrieben, um die Rastierung am Kupplungsstellzylinder CC zu entlasten. Sodann wird die Rastiereinrichtung 26 am Kupplungsstellzylinder CC bestromt, die Pumpe P auf linksdrehend umgeschaltet und der Kolben 20 im Kupplungsstellzylinder CC weggeregelt verfahren, um die Reibkupplung C in definierter Weise einzurücken und somit mit dem Kraftfahrzeug entsprechend der geforderten Dynamik anzufahren. Ist die Ruhestellung erreicht, verrastet die entstromte Rastiereinrichtung 26 den Kolben 20 (Rastiervorsprung 76 steht mit Aussparung 66 in Eingriff); die Pumpe P wird abgeschaltet.
B. Gangwechsel: Das Steuergerät ECU erhält von der übergeordneten Getriebesteuerung das Signal für einen Gangwechsel. Alle elektrischen Bauteile außer den Wegsensoren sind stromlos, wenn nicht anders angegeben; der Kupplungsstellzylinder CC ist in Ruhestellung rastiert, die Getriebestellzylinder GC1 bis GC4 in ihrer jeweiligen Stellung.
B.1 Für einen Gangwechsel wird zunächst die Reibkupplung C wie oben unter A.1 beschrieben geöffnet.
B.2 Um den 1. Vorwärtsgang G1 herauszunehmen, wird die Rastiereinrichtung am Getriebestellzylinder GC1 bestromt. Die Pumpe P wird linksdrehend betrieben, so dass das Getriebestellglied F1 nach rechts gezogen wird. Hat der Kolben des Getriebestellzylinders GC1 die Mittelstellung erreicht, wird er durch Entstromen der zugeordneten Rastiereinrichtung festgehalten (Eingriff in Aussparung b1).
B.3 Um den 2. Vorwärtsgang G2 einzulegen, wird die Rastiereinrichtung am Getriebestellzylinder GC2 bestromt. Die Pumpe P wird rechtsdrehend betrieben, so dass das Getriebestellglied F2 nach links geschoben wird. Hat der Kolben des Getriebestellzylinders GC2 seine linke Stellung erreicht, wird er durch Entstromen der zugeordneten Rastiereinrichtung festgehalten (Eingriff in Aussparung c2).
B.4 Um die Reibkupplung C zu schließen, wird die Pumpe P zunächst rechtsdrehend betrieben, so dass die Rastierung am Kupplungsstellzylinder CC entlastet ist. Sodann wird die Rastiereinrichtung 26 am Kupplungsstellzylinder CC bestromt, die Pumpe P auf linksdrehend umgeschaltet und der Kolben 20 im Kupplungsstellzylinder CC weggeregelt verfahren, so dass die Reibkupplung C mit der geforderten Dynamik geschlossen wird. Ist die Ruhestellung erreicht, verrastet die entstromte Rastiereinrichtung 26 den Kolben 20 (Rastiervorsprung 76 steht mit Aussparung 66 in Eingriff); die Pumpe P wird abgeschaltet.

Bei den anderen Gängen wird in analoger Weise verfahren, so dass diesbezügliche Erläuterungen an dieser Stelle entbehrlich sind.

Die weiteren Ausführungsbeispiele gemäß den Fig. 3 bis 5 sollen nachfolgend nur insoweit beschrieben werden, als sie sich von dem oben unter Bezugnahme auf die Fig. 1 und 2 beschriebenen ersten Ausführungsbeispiel unterscheiden. Vorab ist hier festzuhalten, dass die weiteren Ausführungsbeispiele hinsichtlich der Leistungseinheiten 12 und Getriebestellabschnitte 16 sich nicht vom ersten Ausführungsbeispiel unterscheiden und insofern nicht nochmals erläutert werden; Unterschiede bestehen lediglich im Hinblick auf die Ausgestaltung der Kupplungsbetätigungsabschnitte 18, und zwar wie folgt.

Bei dem zweiten Ausführungsbeispiel sind gemäß Fig. 3 ausgehend vom Kupplungsgeberzylinder CM in die Druckleitung 104 zwischen dem Kupplungsgeberzylinder CM und dem Kupplungsnehmerzylinder CS ein in Richtung des Kupplungsgeberzylinders CM sperrendes Rückschlagventil 122 und ein elektromagnetisch betätigbares Proportional-Drosselventil 124 geschaltet. Mittels des über das Steuergerät ECU elektrisch ansteuerbaren Proportional-Drosselventils 124, das über eine Ablaufleitung 126 mit dem Ausgleichsbehälter 100 verbunden ist, kann der hydraulische Druck im Kupplungsnehmerzylinder CS definiert eingestellt werden.

Das Proportional-Drosselventil 124 ist im dargestellten Ausführungsbeispiel als elektromagnetisch betätigbares, im nicht angesteuerten Zustand in Durchgangs-Null-Stellung geschaltetes 2/2 Kugelsitzventil ausgeführt, wie es prinzipiell aus der DE-A-196 33 420 (Fig. 4) derselben Anmelderin bekannt ist, auf die bezüglich weiterer Details zum Ventil hiermit ausdrücklich Bezug genommen wird. Durch elektromagnetisch bewirktes Halten des von einem Ventilsitz weg federvorgespannten Ventilkörpers (Kugel) gegen die Federkraft kann ein Drosselspalt zwischen Ventilsitz und Ventilkörper geschlossen bzw. variabel eingestellt werden, über den Hydraulikfluid von der Druckleitung 104 in die Ablaufleitung 126 ablaufen kann, so dass der aufgrund des Rückschlagventils 122 "eingesperrte" Druck im Kupplungsnehmerzylinder CS gehalten oder in definierter Weise zum Ausgleichsbehälter 100 hin entlastet bzw. abgebaut werden kann.

Demgemäß muss zum Öffnen bzw. Ausrücken der Reibkupplung C das Proportional-Drosselventil 124 bestromt werden, um Letzteres zu schließen, so dass sich im Kupplungsnehmerzylinder CS überhaupt ein Druck aufbauen kann, wenn der Kupplungsgeberzylinder CM wie oben beschrieben vom Kupplungsstellzylinder CC betätigt wird. Zum Schließen bzw. Einrücken der Reibkupplung C ist es dann nicht erforderlich, die Pumpe P zu betreiben, anders als beim ersten Ausführungsbeispiel; dies kann vielmehr feinfühlig unter geeigneter elektrischer Ansteuerung des Proportional-Drosselventils 124 zur variablen Einstellung des Drosselspalts erfolgen. Allerdings muss der Kupplungsstellzylinder CC zugleich oder danach wieder in seinen Ausgangs- oder Ruhezustand gebracht werden, und zwar durch Aufheben der Verrastung des Kolbens 20 in der Betätigungsstellung durch Bestromen der Rastiereinrichtung 26, Verschieben des Kolbens 20 durch linksdrehendes Betreiben der Pumpe P und schließlich Verrastung des Kolbens 20 in der Ruhestellung durch Entstromen der Rastiereinrichtung 26.

Auch bei dem in Fig. 4 dargestellten dritten Ausführungsbeispiel sind zwischen dem Kupplungsgeberzylinder CM und dem Kupplungsnehmerzylinder CS ein Rückschlagventil 122 und ein Proportional-Drosselventil 124 - hier wiederum ein elektromagnetisch betätigbares 2/2 Kugelsitzventil - hintereinander geschaltet. Letzteres befindet sich jedoch, anders als beim zweiten Ausführungsbeispiel, im nicht angesteuerten Zustand in Sperr-Null-Stellung, d.h. der Ventilkörper ist gegen den Ventilsitz federvorgespannt und muss elektromagnetisch bewirkt gegen die Federkraft vom Ventilsitz abgehoben werden, um den Drosselspalt definiert einzustellen. Im gezeigten Schaltbild gemäß Fig. 4 ist das Proportional-Drosselventil 124 so angeordnet, dass es unbestromt wie ein federvorgespanntes, in Richtung des Kupplungsgeberzylinders CM sperrendes Rückschlagventil wirkt. Zudem ist zwischen dem Rückschlagventil 122 und dem Proportional-Drosselventil 124 ein Druckspeicher 128 in die Druckleitung 104 geschaltet, die darüber hinaus zwischen dem Rückschlagventil 122 und dem Proportional-Drosselventil 124 über ein elektromagnetisch betätigbares, im nicht angesteuerten Zustand federvorgespannt sperrendes Schaltventil 130 mit der Ablaufleitung 126 hydraulisch verbunden ist.

In Fig. 4 ist schließlich bei 132 ein - ebenso wie das Schaltventil 130 - elektrisch an das Steuergerät ECU angeschlossener Drucksensor zur Erfassung des Drucks in der Druckleitung 104 gezeigt, mittels dessen z.B. Leckagen erkannt werden können und der grundsätzlich auch bei den anderen Ausführungsbeispielen vorgesehen werden kann. In der vorliegenden Schaltung kann der Drucksensor 132 vorteilhaft auch dazu dienen, in Verbindung mit dem Steuergerät ECU das Proportional-Drosselventil 124 definiert so vorzubestromen, dass dessen Öffnungspunkt schneller angefahren werden kann.

Zum Betrieb der Betätigungsvorrichtung 10 gemäß dem dritten Ausführungsbeispiel ist zunächst anzumerken, dass das Schaltventil 130 - wenn die Reibkupplung C nicht gerade geöffnet werden soll - periodisch, d.h. in regelmäßigen Abständen bestromt wird, um einen Volumensausgleich zu gewährleisten, der infolge von Wärmedehnungen etc. erforderlich sein kann.

Das Aus- und Einrücken der Reibkupplung C erfolgt dann wie folgt: Zunächst wird zum Füllen des (Feder)Druckspeichers 128 die Rastiereinrichtung 26 bestromt und die Pumpe P rechtsdrehend eingeschaltet, so dass der Kupplungsstellzylinder CC den Kupplungsgeberzylinder CM betätigt. Die Federvorspannung am Proportional-Drosselventil 124 ist hierbei so hoch, dass das infolge der Betätigung des Kupplungsgeberzylinders CM verdrängte Volumen an Hydraulikfluid in den Druckspeicher 128 gedrückt wird; das Rückschlagventil 122 und das sperrende Schaltventil 130 halten den Druck. Dann wird die Pumpe P linksdrehend betrieben, bis der Kolben 20 seine Ruhestellung erreicht. Dabei saugt der Kupplungsgeberzylinder CM über den Nachlaufanschluss 98 Hydraulikfluid aus dem Ausgleichsbehälter 100 nach, so dass er für die nächste Betätigung bereit ist. Ggf. können mehrere solcher Betätigungen des Kupplungsgeberzylinders CM über den Kupplungsstellzylinder CC erfolgen, bis der Druckspeicher 128 hinreichend gefüllt ist. Anschließend wird die Rastiereinrichtung 26 entstromt und verriegelt den Kolben 20 des Kupplungsstellzylinders CC; die Pumpe P wird abgeschaltet.

Das Öffnen bzw. Ausrücken der Reibkupplung C erfolgt danach alleine durch geeignetes Bestromen des Proportional-Drosselventils 124, wobei der Druckspeicher 128 den für die Betätigung des Kupplungsnehmerzylinders CS erforderlichen Druck liefert.

Zum Schließen bzw. Einrücken der Reibkupplung C wird zunächst das Schaltventil 130 bestromt, um die Druckleitung 104 mit der Ablaufleitung 126 zu verbinden. Schließlich wird das Proportional-Drosselventil 124 geeignet angesteuert, um den Kupplungsnehmerzylinder CS definiert hydraulisch zu entlasten und dabei eine weggeregelte Einrückbewegung zu bewirken.

Das in Fig. 5 gezeigte vierte Ausführungsbeispiel unterscheidet sich von den bisher beschriebenen Ausführungsbeispielen im Wesentlichen dadurch, dass der Kolben 20 des Kupplungsstellzylinders CC auf zwei gegenüberliegenden Seiten 22, 24 mit jeweils einer Reibkupplung C, C' wirkverbunden ist, so dass mittels des Kupplungsstellzylinders CC wahlweise die eine Reibkupplung C, die in einem Doppelkupplungsgetriebe z.B. den geradzahligen Vorwärtsgängen G2, G4 und G6 sowie dem Rückwärtsgang GR zugeordnet sein kann, oder die andere Reibkupplung C', welche in einem Doppelkupplungsgetriebe etwa den ungeradzahligen Vorwärtsgängen G1, G3, G5 und G7 zugeordnet sein kann, betätigbar ist. Dabei ist der Kolben 20 des Kupplungsstellzylinders CC auf beiden Seiten mechanisch mit jeweils einem Geberkolben 84, 84' eines Kupplungsgeberzylinders CM, CM' gekoppelt. Die jeweilige weitere Wirkverbindung zur Reibkupplung C bzw. C' ist wie bei dem zweiten Ausführungsbeispiel gemäß Fig. 3 ausgebildet, so dass insofern auf die obige Beschreibung verwiesen werden kann.

Anders als bei den vorhergehenden Ausführungsbeispielen ist am Kolben 20 ferner eine weitere Aussparung 67 vorgesehen, so dass dieser insgesamt drei Aussparungen 66, 67, 68 besitzt. Die mittlere Aussparung 67 definiert hierbei die Grund- oder Ruhestellung des Kolbens 20 im Kupplungsstellzylinder CC, die in Fig. 5 rechte Aussparung 66 die Betätigungsstellung des Kolbens 20 bei Betätigung der einen Reibkupplung C' und die in Fig. 5 linke Aussparung 68 die Betätigungsstellung des Kolbens 20 bei Betätigung der anderen Reibkupplung C. Die Rastierung und Verschiebung des Kolbens 20 erfolgt wie schon oben beschrieben.

Für den Fachmann ist ersichtlich, dass somit ein überschneidender Betrieb der Reibkupplungen C, C' möglich ist. Soll z.B. der Gang vom ersten Vorwärtsgang G1 in den zweiten Vorwärtsgang G2 gewechselt werden, kann - ausgehend von einem Zustand, bei dem die dem ersten Vorwärtsgang G1 zugeordnete Reibkupplung C' geschlossen ist, während die dem zweiten Vorwärtsgang G2 zugeordnete Reibkupplung C mit bestromten Proportional-Drosselventil 124 geöffnet gehalten wird - stichwortartig beschrieben wie folgt vorgegangen werden.
C.1 Einlegen des zweiten Gangs im "losen" Teilgetriebe: Rastiereinrichtung am Getriebestellzylinder GC2 bestromen; Pumpe P rechtsdrehend betreiben und damit den zweiten Vorwärtsgang G2 einlegen; Rastiereinrichtung am Getriebestellzylinder GC2 entstromen und somit den entsprechenden Stellzylinderkolben fixieren (Eingriff in Aussparung c2; vgl. Fig. 1).
C.2 "Überschneiden" der Kupplungen: Rastiereinrichtung 26 am Kupplungsstellzylinder CC und Proportional-Drosselventil 124' bestromen; Pumpe P linksdrehend betreiben und damit den Kupplungsgeberzylinder CM' betätigen; Letzter steuert den Kupplungsnehmerzylinder CS' hydraulisch an, der die Reibkupplung C' öffnet. Parallel dazu: geregeltes Entstromen des Proportional-Drosselventils 124, so dass der Kupplungsnehmerzylinder CS hydraulisch entlastet und die Reibkupplung C geschlossen wird. In (linker) Endstellung des Kolbens 20 im Kupplungsstellzylinder CC wird die Rastiereinrichtung 26 entstromt, so dass der Kolben 20 in Position gehalten wird (Eingriff in Aussparung 66).
C.3 Herausnehmen des 1. Gangs im jetzt "losen" Teilgetriebe: Rastiereinrichtung am Getriebestellzylinder GC1 bestromen; Pumpe P linksdrehend betreiben, wodurch der erste Vorwärtsgang G1 herausgezogen wird; Rastiereinrichtung am Getriebestellzylinder GC1 entstromen, sobald der entsprechende Stellzylinderkolben seine Mittelstellung erreicht hat, in der er somit verrastet wird (Eingriff in Aussparung b1; vgl. Fig. 1).
C.4 Ausgangsstellung des Kupplungsstellzylinders CC wieder herstellen: Parallel zu oder nach dem Herausnehmen des ersten Vorwärtsgangs G1 wird die Rastiereinrichtung 26 bestromt und die Pumpe P linksdrehend betrieben, bis der Kolben 20 seine Ruhestellung erreicht hat, in der die Rastiereinrichtung 26 entstromt wird und somit den Kolben 20 verrastet (Eingriff in Aussparung 67).

Ein Wechsel zwischen den anderen Gängen kann in analoger Weise erfolgen, diesbezügliche Ausführungen sind insofern entbehrlich.

Eine hydraulische Betätigungsvorrichtung für wenigstens eine Reibkupplung und mindestens ein Getriebestellglied umfasst eine Leistungseinheit zur Druckerzeugung mittels einer elektroangetriebenen Pumpe, daran hydraulisch angeschlossene Getriebestell- und Kupplungsbetätigungsabschnitte mit Getriebestellund Kupplungsstellzylindern sowie ein elektrisches Steuergerät zur Steuerung dieser Baugruppen. Einem Kolben des Kupplungsstellzylinders, der mit der Reibkupplung wirkverbunden und auf gegenüberliegenden Seiten hydraulisch beaufschlagbar ist, ist eine Rastiereinrichtung mit einem Sperrelement zugeordnet, das in eine eine Kolbenbewegung verhindernde Sperrstellung federvorgespannt ist und welches mittels eines über das Steuergerät ansteuerbaren Aktuators von der Sperrstellung in eine eine Kolbenbewegung zulassende Lösestellung bewegbar ist. Dabei ist eine Pumprichtung der Pumpe umkehrbar, um den Kolben für eine Betätigungsbewegung je nach Pumprichtung auf der einen oder anderen Seite zu beaufschlagen. Das Steuergerät koordiniert die Ansteuerung von Pumpenantrieb und Aktuator, um die Reibkupplung aus- bzw. einzurücken.

### BEZUGSZEICHENLISTE

- 10: hydraulische Betätigungsvorrichtung
- 12: Leistungseinheit
- 14: Vorratsbehälter
- 16: Getriebestellabschnitt
- 18: Kupplungsbetätigungsabschnitt
- 20: Kolben
- 22: Seite
- 24: Seite
- 26: Rastiereinrichtung
- 28: Sperrelement
- 30: Feder
- 32: Aktuator
- 34: Hydraulikanschluss
- 36: Hydraulikanschluss
- 38: Ansaugleitung
- 40: Ansaugleitung
- 42: Rückschlagventil
- 44: Rückschlagventil
- 46: Druckleitung
- 48: Druckleitung
- 50: Druckanschluss
- 52: Druckanschluss
- 54: Zylindergehäuse
- 56: Zylinderraum
- 58: Druckraum
- 60: Druckraum
- 62: Dichtelement
- 64: Dichtelement
- 66: Aussparung
- 67: Aussparung
- 68: Aussparung
- 70: Gehäuse
- 72: Magnetspule
- 74: Öffnung
- 76: Rastiervorsprung
- 78: Bodenbereich
- 80, 80': Kolbenstange
- 82: Wandung
- 84, 84': Geberkolben
- 86, 86': Zylindergehäuse
- 88, 88': Druckraum
- 90: Primärdichtelement
- 92: Sekundärdichtelement
- 94: Nachlaufbereich
- 96: Nachlaufverbindung
- 98: Nachlaufanschluss
- 100, 100': Ausgleichsbehälter
- 102, 102': Druckanschluss
- 104, 104': Druckleitung
- 106, 106': Zylindergehäuse
- 108, 108': Nehmerkolben
- 110, 110': Druckraum
- 112, 112': mechanische Verbindung
- 114, 114': Sensoreinrichtung
- 116: Sensor
- 118: Signalelement
- 120, 120': Hubsensorik
- 122, 122': Rückschlagventil
- 124, 124': Proportional-Drosselventil
- 126, 126': Ablaufleitung
- 128: Druckspeicher
- 130: Schaltventil
- 132: Drucksensor

- a1 - a4: Sperraussparungen
- b1 - b4: Sperraussparungen
- c1 - c4: Sperraussparungen
- C, C': Reibkupplung
- CC: Kupplungsstellzylinder
- CM, CM': Kupplungsgeberzylinder
- CS, CS': Kupplungsnehmerzylinder
- ECU: Steuergerät
- F1 - F4: Getriebestellglieder
- G1 - G7: Vorwärtsgänge
- GC1 - GC4: Getriebestellzylinder
- GR: Rückwärtsgang
- P: Pumpe
- M: elektrischer Pumpenantrieb
- R: Pumprichtung

## Patentansprüche

1. Hydraulische Betätigungsvorrichtung (10) für die Betätigung wenigstens einer Reibkupplung (C, C') und wenigstens eines Getriebestellglieds (F1 - F4) in einem Kraftfahrzeug, umfassend eine Leistungseinheit (12) zur Erzeugung eines hydraulischen Drucks mittels einer Pumpe (P), die über einen elektrischen Pumpenantrieb (M) antreibbar ist, um Hydraulikfluid in einer Pumprichtung (R) zu verschieben, einen Getriebestellabschnitt (16) mit einem Getriebestellzylinder (GC1 - GC4) für das Getriebestellglied (F1 - F4), der hydraulisch an die Leistungseinheit (12) angeschlossen ist, einen Kupplungsbetätigungsabschnitt (18) mit einem hydraulisch an die Leistungseinheit (12) angeschlossenen Kupplungsstellzylinder (CC), dessen Kolben (20) mit der Reibkupplung (C, C') wirkverbunden ist, und ein Steuergerät (ECU), das mit dem Pumpenantrieb (M) und Steuergliedern für den Getriebestellabschnitt (16) und den Kupplungsbetätigungsabschnitt (18) elektrisch verbunden ist, **dadurch gekennzeichnet, dass** dem Kolben (20) des Kupplungsstellzylinders (CC), der auf gegenüberliegenden Seiten (22, 24) hydraulisch beaufschlagbar ist, als Steuerglied eine Rastiereinrichtung (26) mit einem Sperrelement (28) funktional zugeordnet ist, das in eine eine Bewegung des Kolbens (20) verhindernde Sperrstellung federvorgespannt ist und welches mittels eines über das Steuergerät (ECU) elektrisch ansteuerbaren Aktuators (32) von der Sperrstellung gegen die Federvorspannung in eine eine Bewegung des Kolbens (20) zulassende Lösestellung bewegbar ist, wobei die Pumprichtung (R) der Pumpe (P) umkehrbar ist, um den Kolben (20) des Kupplungsstellzylinders (CC) für eine Betätigungsbewegung je nach Pumprichtung (R) auf seiner einen oder seiner anderen Seite (22, 24) hydraulisch zu beaufschlagen, und wobei das Steuergerät (ECU) die elektrische Ansteuerung von Pumpenantrieb (M) und Aktuator (32) koordiniert, um die Reibkupplung (C, C') aus- und einzurücken.

2. Betätigungsvorrichtung (10) nach Anspruch 1, **dadurch gekennzeichnet, dass** die Rastiereinrichtung (26) am Kupplungsstellzylinder (CC) angebracht ist, wobei das Sperrelement (28) mit Sperrabschnitten am Kolben (20) des Kupplungsstellzylinders (CC) zusammenwirkt, um den Kolben (20) in einer Ruhestellung oder einer Betätigungsstellung zu halten oder aus der jeweiligen Stellung freizugeben.

3. Betätigungsvorrichtung (10) nach Anspruch 2, **dadurch gekennzeichnet, dass** die Sperrabschnitte am Kolben (20) des Kupplungsstellzylinders (CC) durch axial voneinander beabstandete Aussparungen (66 - 68) am Kolbenumfang ausgebildet sind.

4. Betätigungsvorrichtung (10) nach einem der vorhergehenden Ansprüche, **dadurch gekennzeichnet, dass** der Kolben (20) des Kupplungsstellzylinders (CC) auf zwei gegenüberliegenden Seiten (22, 24) mit jeweils einer Reibkupplung (C, C') wirkverbunden ist, so dass mittels des Kupplungsstellzylinders (CC) wahlweise die eine Reibkupplung (C) oder die andere Reibkupplung (C') betätigbar ist.

5. Betätigungsvorrichtung (10) nach einem der vorhergehenden Ansprüche, **dadurch gekennzeichnet, dass** der Kupplungsstellzylinder (CC) eine Sensoreinrichtung (114) zur Erfassung der Position des Kolbens (20) aufweist, mit einem am Zylindergehäuse (54) angeordneten Sensor (116) und einem am Kolben (20) befestigten Signalelement (118).

6. Betätigungsvorrichtung (10) nach einem der vorhergehenden Ansprüche, **dadurch gekennzeichnet, dass** es sich bei dem elektrisch ansteuerbaren Aktuator um einen elektromagnetischen Aktuator (32) handelt.

7. Betätigungsvorrichtung (10) nach einem der vorhergehenden Ansprüche, **dadurch gekennzeichnet, dass** der Kolben (20) des Kupplungsstellzylinders (CC) auf wenigstens einer Seite mechanisch mit einem Geberkolben (84, 84') eines Kupplungsgeberzylinders (CM, CM') gekoppelt ist, welcher über eine Druckleitung (104, 104') hydraulisch an einen Kupplungsnehmerzylinder (CS, CS') mit einem Nehmerkolben (108, 108') angeschlossen ist, der mechanisch mit der Reibkupplung (C, C') verbunden ist.

8. Betätigungsvorrichtung (10) nach Anspruch 7, **dadurch gekennzeichnet, dass** dem Kupplungsgeberzylinder (CM, CM') ein Ausgleichsbehälter (100, 100') für Hydraulikfluid zugeordnet ist, wobei ausgehend vom Kupplungsgeberzylinder (CM, CM') in die Druckleitung (104, 104') zwischen dem Kupplungsgeberzylinder (CM, CM') und dem Kupplungsnehmerzylinder (CS, CS') ein in Richtung des Kupplungsgeberzylinders (CM, CM') sperrendes Rückschlagventil (122, 122') und ein elektromagnetisch betätigbares, über eine Ablaufleitung (126, 126') mit dem Ausgleichsbehälter (100, 100') verbundenes Proportional-Drosselventil (124, 124') geschaltet sind, mittels dessen der hydraulische Druck im Kupplungsnehmerzylinder (CS, CS') definiert einstellbar ist.

9. Betätigungsvorrichtung (10) nach Anspruch 8, **dadurch gekennzeichnet, dass** sich das Proportional-Drosselventil (124, 124') im nicht angesteuerten Zustand in Durchgangs-Null-Stellung befindet.

10. Betätigungsvorrichtung (10) nach Anspruch 8, **dadurch gekennzeichnet, dass** zwischen dem Rückschlagventil (122) und dem Proportional-Drosselventil (124), welches sich im nicht angesteuerten Zustand in Sperr-Null-Stellung befindet, ein Druckspeicher (128) in die Druckleitung (104) geschaltet ist, die zwischen dem Rückschlagventil (122) und dem Proportional-Drosselventil (124) über ein im nicht angesteuerten Zustand sperrendes Schaltventil (130) mit der Ablaufleitung (126) hydraulisch verbunden ist.

## Claims

1. Hydraulic actuating device (10) for actuation of at least one friction clutch (C, C') and at least one gear setting element (F1 - F4) in a motor vehicle, comprising a power unit (12) for generating a hydraulic pressure by means of a pump (P), which is drivable by way of an electric pump drive (M), in order to displace hydraulic fluid in a pumping direction (R), a gear setting section (16) with a gear setting cylinder (GC1 - GC4) for the gear setting element (F1 - F4), which is hydraulically connected with the power unit (12), a clutch actuating section (18) with a clutch setting cylinder (CC), which is hydraulically connected with the power unit (12) and the piston (20) of which is operatively connected with the friction clutch (C, C'), and a control unit (ECU), which is electrically connected with the pump drive (M) and control elements for the gear setting section (16) and the clutch actuating section (18), **characterized in that** a detenting device (26) with a blocking element (28) is functionally associated, as a control element, with the piston (20), which can be hydraulically loaded on opposite sides (22, 24), of the clutch setting cylinder (CC), which blocking element (28) is resiliently biased into a blocking setting preventing movement of the piston (20) and is movable against the resilient bias from the blocking setting into a release setting, which permits movement of the piston (20), by means of an actuator (32) electrically activatable by way of the control unit (ECU), wherein the pumping direction (R) of the pump (P) is reversible in order to hydraulically load the piston (20) of the clutch setting cylinder (CC) on one or the other side (22, 24) thereof for an actuating movement depending on the respective pumping direction (R), and wherein the control unit (ECU) coordinates the electrical activation of pump drive (M) and actuator (32) in order to disengage and engage the friction clutch (C, C').

2. Actuating device (10) according to claim 1, **characterized in that** the detenting device (26) is mounted on the clutch setting cylinder (CC), wherein the blocking element (28) cooperates with blocking sections at the piston (20) of the clutch setting cylinder (CC) so as to keep the piston (20) in a rest setting or an actuation setting or to release it from the respective setting.

3. Actuating device (10) according to claim 2, **characterized in that** the blocking sections are formed at the piston (20) of the clutch setting cylinder (CC) by axially spaced-apart recesses (66 - 68) at the piston circumference.

4. Actuating device (10) according to any one of the preceding claims, **characterized in that** the piston (20) of the clutch setting cylinder (CC) is operatively connected on each of two opposite sides (22, 24) with a respective friction clutch (C, C') so that one friction clutch (C) or the other friction clutch (C') is selectably actuable by means of the clutch setting cylinder (CC).

5. Actuating device (10) according to any one of the preceding claims, **characterized in that** the clutch setting cylinder (CC) comprises a sensor device (114) for detecting the position of the piston (20), with a sensor (116) arranged at the cylinder housing (54) and a signal element (118) attached to the piston (20).

6. Actuating device (10) according to any one of the preceding claims, **characterized in that** the electrically activatable actuator is an electromagnetic actuator (32).

7. Actuating device (10) according to any one of the preceding claims, **characterized in that** the piston (20) of the clutch setting cylinder (CC) is mechanically coupled on at least one side with a master piston (84, 84') of a clutch master cylinder (CM, CM'), which is hydraulically connected by way of a pressure line (104, 104') with a clutch slave cylinder (CS, CS') with a slave piston (108, 108'), which is mechanically connected with the friction clutch (C, C').

8. Actuating device (10) according to claim 7, **characterized in that** an equalizing reservoir (100, 100') for hydraulic fluid is associated with the clutch master cylinder (CM, CM'), wherein starting from the clutch master cylinder (CM, CM') a non-return valve (122, 122') blocking in the direction of the clutch master cylinder (CM, CM') and an electromagnetically actuable proportional throttle valve (124, 124'), which is connected with the equalizing reservoir (100, 100') by way of an outflow line (126, 126') and by means of which the hydraulic pressure in the clutch slave cylinder (CS, CS') can be set in defined manner, are connected into the pressure line (104, 104') between the clutch master cylinder (CM, CM') and the clutch slave cylinder (CS, CS').

9. Actuating device (10) according to claim 8, **characterized in that** the proportional throttle valve (124, 124') in the non-activated state is disposed in a transition zero setting.

10. Actuating device (10) according to claim 8, **characterized in that** between the non-return valve (122) and the proportional throttle valve (124), which in the non-activated state is in a blocking zero setting, a pressure store (128) is connected into the pressure line (104), which between the non-return valve (122) and the proportional throttle valve (124) is hydraulically connected with the outflow line (126) by way of a switching valve (130) which blocks in a non-activated state.

## Revendications

1. Dispositif d'actionnement hydraulique (10) pour actionner au moins un embrayage à friction (C, C') et au moins un élément d'actionneur de boîte de vitesses (F1-F4) dans un véhicule, comportant une unité de puissance (12) pour générer une pression hydraulique au moyen d'une pompe (P), qui peut être entraînée par l'intermédiaire d'un entraînement de pompe électrique (M), afin de déplacer un fluide hydraulique dans une direction de pompe (R), une partie d'actionneur de boîte de vitesses (16) comportant un cylindre d'actionneur de boîte de vitesses (GC1-GC4) pour l'élément d'actionneur de boîte de vitesses (F1-F4), qui est relié hydrauliquement à l'unité de puissance (12), une partie d'actionnement d'embrayage (18) comportant un cylindre de réglage d'embrayage (CC) relié hydrauliquement à l'unité de puissance (12), dont le piston (20) est relié de façon opérationnelle à l'embrayage à friction (C, C'), et un dispositif de commande (ECU), qui est relié électriquement à l'entraînement de pompe (M) et aux éléments de commande pour la partie d'actionneur de boîte de vitesses (16) et la partie d'actionnement d'embrayage (18), **caractérisé en ce que**, en tant qu'élément de commande, un dispositif d'arrêt (26) comportant un élément de blocage (28) est associé fonctionnellement au piston (20) du cylindre de réglage d'embrayage (CC), qui est sollicité hydrauliquement sur les côtés opposés (22, 24), élément de blocage qui est précontraint élastiquement dans une position de blocage empêchant un mouvement du piston (20) et qui peut être déplacé dans une position débloquée permettant un mouvement du piston (20) au moyen d'un actionneur (32) pouvant être commandé électriquement par le dispositif de commande (ECU) depuis la position de blocage contre la précontrainte élastique, dans lequel la direction de pompe (R) de la pompe (P) peut être inversée, afin de solliciter hydrauliquement le piston (20) du cylindre de réglage d'embrayage (CC) pour un mouvement d'actionnement vers la direction de pompe (R) sur un côté ou sur l'autre (22, 24), et dans lequel le dispositif de commande (ECU) coordonne la commande électrique de l'entraînement de pompe (M) et l'actionneur (32), afin de débrayer et de mettre en prise l'embrayage à friction (C, C').

2. Dispositif d'actionnement (10) selon la revendication 1, **caractérisé en ce que** le dispositif d'arrêt (26) est disposé dans le cylindre de réglage d'embrayage (CC), dans lequel l'élément de blocage (28) agit conjointement avec des parties de blocage dans le piston (20) du cylindre de réglage d'embrayage (CC), afin de stopper le piston (20) dans une position de repos ou une position d'actionnement ou de le libérer de la position respective.

3. Dispositif d'actionnement (10) selon la revendication 2, **caractérisé en ce que** les parties de blocage du cylindre de réglage d'embrayage (CC) sont réalisées à la périphérie du piston dans le piston (20) par des évidements (66-68) espacés axialement les uns des autres.

4. Dispositif d'actionnement (10) selon l'une quelconque des revendications précédentes, **caractérisé en ce que** le piston (20) du cylindre de réglage d'embrayage (CC) est relié de façon opérationnelle à un embrayage à friction respectif (C, C') sur ses deux côtés antagonistes (22, 24), de sorte que le premier embrayage à friction (C) ou l'autre embrayage à friction (C') peut être actionné au choix au moyen du cylindre de réglage d'embrayage (CC).

5. Dispositif d'actionnement (10) selon l'une quelconque des revendications précédentes, **caractérisé en ce que** le cylindre de réglage d'embrayage (CC) présente un dispositif de capteur (114) pour détecter la position du piston (20), comportant un capteur (116) disposé dans le boîtier de cylindre (54) et un élément de signal (118) fixé au piston (20).

6. Dispositif d'actionnement (10) selon l'une des revendications précédentes, **caractérisé en ce que**, concernant l'actionneur pouvant être commandé électriquement, il s'agit d'un actionneur électromagnétique (32).

7. Dispositif d'actionnement (10) selon l'une des revendications précédentes, **caractérisé en ce que** le piston (20) du cylindre de réglage d'embrayage (CC) est couplé au moins d'un côté mécaniquement à un piston émetteur (84, 84') d'un cylindre émetteur d'embrayage (CM, CM'), qui est relié hydrauliquement par l'intermédiaire d'une conduite de pression (104, 104') à un cylindre récepteur d'embrayage (CS, CS') comportant un piston récepteur (108, 108'), qui est relié mécaniquement à l'embrayage à friction (C, C').

8. Dispositif d'actionnement (10) selon la revendication 7, **caractérisé en ce qu'**un vase d'expansion (100, 100') pour le fluide hydraulique est associé au cylindre émetteur d'embrayage (CM, CM'), dans lequel un clapet anti-retour (122, 122') se bloquant dans la direction du cylindre émetteur d'embrayage (CM, CM') et une soupape d'étranglement proportionnelle (124, 124') pouvant être actionnée électromagnétiquement et reliée au vase d'expansion (100, 100') par l'intermédiaire d'une conduite d'évacuation (126, 126'), au moyen de laquelle la pression hydraulique dans le cylindre récepteur d'embrayage (CS, CS') peut être réglée de façon définie, sont montés dans la conduite de pression (104, 104') entre le cylindre émetteur d'embrayage (CM, CM') et le cylindre récepteur d'embrayage (CS, CS') depuis le cylindre émetteur d'embrayage (CM, CM').

9. Dispositif d'actionnement (10) selon la revendication 8, **caractérisé en ce que** la soupape d'étranglement proportionnelle (124, 124') se trouve dans un état non commandé dans la position de passage à la position zéro.

10. Dispositif d'actionnement (10) selon la revendication 8, **caractérisé en ce que**, entre le clapet anti-retour (122) et la soupape d'étranglement proportionnelle (124), qui se trouve dans un état non commandé dans une position fermée, un réservoir de pression (128) est monté dans la conduite de pression (104), qui est reliée hydrauliquement à la conduite d'évacuation (126) par l'intermédiaire d'une soupape de commutation (130) se bloquant dans l'état non commandé entre le clapet anti-retour (122) et la soupape d'étranglement proportionnelle (124).
